# DEMANDE DE BREVET EUROPEEN

(11) **EP 2 265 013 A1**
(43) Date de publication de la demande: **22.12.2010**
(21) Numéro de dépôt: 10166001.7
(22) Date de dépôt: 15.06.2010
(51) Int. Cl.: H04N 7/16

(54) **Transmission de contenu vers un équipement client comportant au moins un module de décodage et un module de sécurité**

(30) Priorité: 19.06.2009 FR 0954201
(71) Demandeur: France Telecom, 75015 Paris (FR)
(72) Inventeur: VIVOLO, Olivier, 35000 Rennes (FR); BECKER, Claudia, 35000 Rennes (FR)
(74) Mandataire: Stephann, Valérie Annabelle

(57) **Abrégé**

Le procédé selon l'invention comprend :
- une transmission (E1) d'un flux chiffré (F₁'(C)) de données relatives à un contenu (C) vers l'équipement client (1),
- une transmission (E'1) d'un flux (F₂[ECM(C)]) de messages de contrôle d'accès au contenu (C) vers l'équipement client (1).

Une liste de révocation contenant une pluralité d'identifiants de module d'équipement client répudié ayant été établie, au moins une partie des messages de contrôle transmis (ECM(C)) contiennent chacun au moins un identifiant de module répudié de ladite liste de révocation.

## Description

L'invention concerne la transmission de contenus dans un système à accès conditionnel, par exemple dans le cadre de la télévision à péage.

Dans un système à accès conditionnel, un flux de données relatives à un contenu est chiffré à l'aide d'une clé secrète de chiffrement, généralement appelée "*control word*", ou "mot de contrôle", avant d'être transmis vers un ou plusieurs équipements clients à travers un réseau par exemple l'Internet. L'accès au contenu est subordonné à la vérification d'un ou plusieurs critères d'accès par l'équipement client. Le mot de contrôle, sous forme chiffrée, et le ou les critères d'accès au contenu sont transmis à l'équipement client dans un message de contrôle d'accès, appelé "ECM" (*Entitlement Control Message*). La clé de déchiffrement du mot de contrôle, sous forme chiffrée, ainsi que les informations nécessaires à la gestion des droits de l'utilisateur sont transmis à l'équipement client, préalablement au contenu, dans un message de gestion appelé "EMM" (*Entitlement Management Message*).

Lors de la transmission d'un contenu, un flux continu de messages ECM est transmis de façon synchrone et concomitante avec la transmission du flux de données relatives au contenu. Généralement, la valeur du mot de contrôle transporté par les ECM successifs du flux change régulièrement, par exemple toutes les 10 secondes. Un ECM, porteur d'un mot de contrôle donné, peut être répété plusieurs fois durant la période de validité de ce mot de contrôle afin de permettre à un nouvel équipement souhaitant accéder au contenu d'obtenir rapidement le mot de contrôle courant pour déchiffrer le flux de données du contenu sans attendre.

L'équipement client comprend généralement un module de décodage, couramment appelé décodeur set-top-box, et au moins un module de sécurité tel qu'une carte à puce et/ou un "chipset" (c'est-à-dire un ou plusieurs processeurs) sécurisé incorporé dans la set-top-box. Dans le cas où l'équipement client comprend à la fois une carte à puce et un chipset sécurisé, les mots de contrôle reçus sont sur-chiffrés (c'est-à-dire chiffrés deux fois) et destinés à être déchiffré, d'une part, par la carte à puce et, d'autre part, par le chipset. Ces modules de décodage et de sécurité sont adaptés pour dialoguer entre eux. Le module de sécurité mémorise les droits de l'utilisateur fournis par un ou plusieurs message(s) EMM(s) reçu(s). A la réception d'un message ECM, ce module de sécurité a pour rôle de vérifier si le ou les critères d'accès présents dans cet ECM sont satisfaits par comparaison avec les droits de l'utilisateur mémorisés. Si la vérification est positive, le module de sécurité déchiffre le mot de contrôle de l'ECM reçu puis le transmet au module de décodage qui peut alors déchiffrer des données du flux de données de contenu reçu.

Pour des raisons de sécurité, afin d'éviter un piratage des mots de contrôle, la transmission de ceux-ci sous forme déchiffrée du module de sécurité au module de décodage est protégée par chiffrement cryptographique. A cet effet, le module de sécurité et le module de décodage se mettent d'accord pour utiliser une clé cryptographique de chiffrement lors d'un processus dit de "mise à clé" préalable à tout dialogue entre les deux modules.

Avant de réaliser la mise à clé, le module de sécurité et le module de décodage peuvent réaliser une authentification mutuelle. Cette authentification peut être basée sur une infrastructure à clés publiques, ou PKI (Public Key Infrastructure), et nécessite un échange de certificats entre le module de décodage et le module de sécurité. Chaque module recevant le certificat de l'autre module doit alors réaliser diverses vérifications, notamment une vérification de non-répudiation de l'autre module.

La vérification de non-répudiation par un module de l'autre module consiste à vérifier si ce module est listé dans une liste noire d'identifiants de modules répudiés. Cette liste contient des identifiants d'un ensemble de modules répudiés tels qu'un module compromis dont il existe des clones non légitimes, un module traître qui permet de redistribuer des données du système, telles que les mots de contrôle, à une communauté. Cette liste noire de révocation peut être volumineuse. Son stockage dans un module de sécurité tel qu'une carte à puce est par conséquent problématique compte tenu des capacités de stockage limitées de la carte.

La présente invention vise à améliorer la situation.

A cet effet, l'invention concerne un procédé de transmission d'un flux de données relatives à un contenu numérique, à travers un réseau de communication, vers un équipement client comportant au moins deux modules, l'un de décodage et l'autre de sécurité, adaptés pour dialoguer entre eux, dans lequel il est prévu:
- une transmission d'un flux chiffré de données relatives au contenu vers l'équipement client,
- une transmission d'un flux de messages de contrôle d'accès au contenu vers l'équipement client, caractérisé par le fait que, une liste de révocation contenant des identifiants de module d'équipement client répudié ayant été établie, au moins une partie des messages de contrôle d'accès transmis contiennent chacun au moins un identifiant de module répudié de ladite liste de révocation.

Avantageusement, l'intégralité des identifiants de la liste de révocation est transmise par la transmission d'un ensemble de messages de contrôle d'accès.

D'emblée, on notera que
- les termes "contenu numérique" désignent tout contenu apte à être transmis à travers un réseau de communication; il peut s'agir d'un contenu vidéo (film, programme TV, etc.), d'un contenu audio (musique, programme radio, etc.) ou plus généralement d'un contenu multimédia;
- les termes "équipement client" désignent tout type d'équipement d'un client ou utilisateur; il peut s'agir d'un équipement de réception TV, d'un terminal mobile, d'un ordinateur, etc.;
- les termes "module de décodage" désignent un module apte à décoder le flux de données véhiculant le contenu numérique, afin de permettre une restitution de ce contenu;
- les termes "module de sécurité" désignent un module apte à réaliser des opérations critiques, sensibles dans un environnement sécurisé, protégé ; ces opérations sont par exemple le stockage de données secrètes, confidentielles (par exemple une clé) ou de données à besoin d'intégrité (par exemple des droits d'utilisateur), ou bien des opérations cryptographiques (par exemple une opération de déchiffrement).

La liste de révocation peut contenir, dans un premier exemple de réalisation, des identifiants de modules de décodage répudiés ou, dans un deuxième exemple de réalisation, des identifiants de modules de sécurité répudiés.

Le module de sécurité et le module de décodage peuvent être séparés ou bien intégrés dans un même dispositif.

Grâce à l'invention, il n'est plus nécessaire de stocker les identifiants de la liste de révocation dans l'équipement client. Par exemple, on peut envisager d'insérer un identifiant de la liste de révocation dans chaque message de contrôle d'accès. Ainsi, dans l'hypothèse où la liste de révocation contient N identifiants, l'envoi de N messages successifs distincts permet de transmettre l'intégralité de la liste de révocation à l'équipement client. Compte tenu de la fréquence d'envoi des messages de contrôle d'accès successifs et de la taille d'une telle liste, cela permet, en toute hypothèse, de transmettre rapidement à l'équipement client toute cette liste de révocation.

Avantageusement, les identifiants transmis dans les messages de contrôle sont ceux de modules de décodage répudiés. Grâce à cela, on évite de mémoriser la liste noire de révocation des modules de décodage dans le module de sécurité. Cela est particulièrement intéressant dans le cas où celui-ci a des capacités de stockage limitées.

L'invention concerne aussi un procédé de réception d'un flux continu de données relatives à un contenu numérique, à travers un réseau de communication, par un équipement client comportant au moins deux modules, l'un de décodage et l'autre de sécurité, adaptés pour dialoguer entre eux, dans lequel il est prévu
- une réception d'un flux chiffré de données relatives au contenu,
- une réception d'un flux de messages de contrôle d'accès au contenu,
   caractérisé par le fait que, au moins une partie des messages de contrôle d'accès reçus contenant chacun au moins un identifiant de module répudié d'une liste de révocation comportant des identifiants de module d'équipement client répudié, il est prévu une étape de comparaison de chaque identifiant de module répudié reçu avec un identifiant du module correspondant courant de l'équipement client et, en cas de comparaison positive, la transmission entre les deux modules de l'équipement client est au moins partiellement interrompu.

Ainsi, à la réception d'un message de contrôle contenant un identifiant de la liste noire de révocation de modules de décodage par exemple, le module de sécurité compare cet identifiant de module de décodage répudié à l'identifiant de module de décodage courant. S'il s'avère qu'il y a correspondance, le module de sécurité peut interdire tout dialogue avec le module de décodage ou seulement la transmission de certaines données telles que les mots de contrôle.

Avantageusement, l'un des deux modules de l'équipement client stockant l'identifiant d'au moins un module précédent avec lequel il a précédemment dialogué, il est prévu, lors de l'étape de comparaison, de comparer chaque identifiant de module répudié reçu à l'identifiant de module précédent stocké. Grâce à cela, si on considère par exemple que le module de sécurité reçoit l'identifiant d'un module de décodage répudié avec lequel il a précédemment dialogué, le module de sécurité peut immédiatement prendre en compte la répudiation de ce précédent module de décodage. Le module de sécurité peut alors refuser tout dialogue ultérieur avec ce module de décodage répudié, sans attendre une nouvelle réception de l'identifiant de ce module de décodage répudié transmis dans un message de contrôle d'accès.

L'invention concerne aussi un serveur de génération et d'émission à travers un réseau de communication de messages de contrôle d'accès, comprenant des moyens de génération de messages de contrôle d'accès à un contenu numérique et des moyens d'émission des messages de contrôle d'accès générés sous la forme d'un flux synchronisé avec la transmission d'un flux de données du contenu, caractérisé par le fait que, une liste de révocation contenant des identifiants de module d'équipement client répudié ayant été établie, les moyens de génération de messages de contrôle d'accès sont agencés pour insérer dans au moins une partie des messages de contrôle d'accès au moins un identifiant de module répudié de ladite liste de révocation par message.

L'invention concerne également un équipement de réception d'un flux de données relatives à un contenu numérique, à travers un réseau de communication, comportant au moins deux modules, l'un de décodage et l'autre de sécurité, adaptés pour dialoguer entre eux, dans lequel il est prévu
- des moyens de réception d'un flux chiffré de données de contenu,
- des moyens de réception d'un flux de messages de contrôle d'accès au contenu,
   caractérisé par le fait qu'au moins une partie des messages de contrôle d'accès reçus contenant chacun au moins un identifiant de module répudié d'une liste de révocation, il comprend des moyens de comparaison adaptés pour comparer un identifiant de module répudié reçu dans un message de contrôle d'accès avec un identifiant du module correspondant courant de l'équipement client et, en cas de comparaison positive, des moyens pour commander une interruption au moins partielle du dialogue entre les deux modules de l'équipement client.

L'invention sera mieux comprise à l'aide de la description suivante d'un exemple de réalisation particulier des procédés de transmission et de réception d'un flux de données relatives à un contenu, du serveur de génération et d'émission d'un flux de messages de contrôle d'accès au contenu et d'un équipement de réception du flux de données relatives au contenu et du flux de messages de contrôle d'accès à ce contenu, en référence aux dessins annexés sur lesquels :
- la figure 1 représente une vue schématique du système de transmission et de l'équipement de réception;
- la figure 2 représente un organigramme des étapes des procédés d'émission et de réception, selon un exemple particulier de réalisation;
- la figure 3 représente un schéma bloc fonctionnel du serveur d'émission de contenus du système de la figure 1, selon un exemple particulier de réalisation;
- la figure 4 représente un schéma bloc fonctionnel du serveur d'émission de messages de contrôle d'accès du système de la figure 1, selon un exemple particulier de réalisation;
- la figure 5A représente un schéma bloc fonctionnel d'un décodeur de l'équipement de réception de la figure 1, selon un exemple particulier de réalisation, et
- la figure 5B représente un schéma bloc fonctionnel d'une carte à puce de l'équipement de réception de la figure 1, selon un exemple particulier de réalisation.

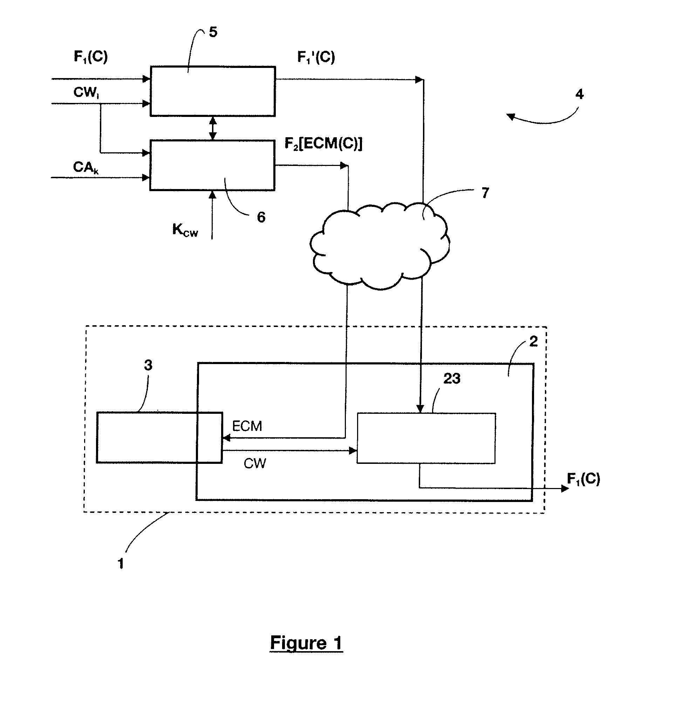

Sur la figure 1, on a représenté un système 4 de transmission de contenus numériques à accès conditionnel vers une pluralité d'équipements clients. Par souci de clarté, un seul équipement client 1 est représenté sur la figure 1. Dans l'exemple particulier de la description, le système 4 est un système de diffusion de programmes de télévision numérique à travers un réseau 7, en l'espèce l'Internet. Par souci de concision, seuls les éléments du système 4 nécessaires à la compréhension de l'invention seront décrits.

Le système de transmission 4 comprend un serveur 5 d'émission de contenus numériques, en l'espèce des programmes de télévision, et un serveur 6 d'émission de messages de contrôle d'accès aux contenus, que l'on appellera par la suite des messages ECM (*Entitlement Control Message*).

Pour la transmission d'un contenu C, une succession de mots de contrôle, notés CWᵢ avec i valant 1, 2, 3, ...., destinés à chiffrer des trames successives du contenu C, sont fournis parallèlement à la fois au serveur 5 d'émission de contenus et au serveur 6 d'émission de messages ECM par un système de génération de mots de contrôle, non représenté. Un mot de contrôle CWᵢ correspond à une clé secrète destinée à être utilisée pour chiffrer et déchiffrer des données média d'un contenu. Les données média d'un contenu comprennent ici des données audio, des données vidéo et, le cas échéant, des données texte du contenu C.

En fonctionnement, pour la diffusion d'un contenu C (ici un programme TV) vers un ou plusieurs équipements clients, le serveur 5 d'émission de contenus reçoit en entrée, outre la succession de mots de contrôle CWᵢ, avec *i* = {1,2,3,...}, associés au contenu C, un flux en clair de données média du contenu C, noté F₁(C). Il chiffre ensuite des trames successives de données média du flux F₁(C), notées Tᵢ(C), avec *i* = {1,2,3,...}, à l'aide des mots de contrôle successifs reçus CWᵢ, avec *i* = {1,2,3,...}, et émet à travers l'Internet 7 un flux média chiffré du contenu C, noté F'₁(C), vers des équipements clients. Dans l'exemple particulier décrit ici, les mots de contrôle utilisés pour chiffrer les données du flux F₁(C) du contenu changent régulièrement, par exemple toutes les dix secondes.

En fonctionnement, pour la diffusion d'un contenu C (ici un programme TV), le serveur 6 d'émission d'ECM reçoit, outre la succession de mots de contrôle associés au contenu C, un ou plusieurs critères d'accès au contenu C, notés CAₖ avec *k* ≥ 1, dans le cas où le contenu C est à accès conditionnel, et une clé de chiffrement des mots de contrôle, notée K_{CW}. Toutefois, si le contenu C diffusé est protégé mais en accès libre (on parle dans ce cas de "free scrambling", c'est-à-dire de chiffrement libre) le serveur 6 d'émission d'ECM reçoit uniquement une clé K_{CW} de chiffrement de mots de contrôle (sans critère d'accès).

En outre, le serveur 6 d'émission d'ECM a accès à une liste noire de révocation contenant des identifiants de décodeurs répudiés. Cette liste noire est établie par une entité du réseau, non représentée, et est régulièrement mise à jour. Le serveur 6 peut la recevoir à chaque mise à jour ou bien la récupérer auprès de l'entité du réseau qui l'a établie sur demande.

A partir des mots de contrôle, des critères d'accès, de la clé K_{CW} reçue et de la liste noire de révocation, le serveur 6 génère une succession de messages de contrôle d'accès, notés ECMᵢ avec *i* = {1,2,3,...}. Dans chaque message ECMᵢ, avec *i* = {1,2,3,...}, généré, le serveur 6 insère
- un mot de contrôle CWᵢ, sous forme chiffrée à l'aide de la clé de chiffrement K_{CW}, utilisé par le serveur d'émission 5 pour chiffrer une trame de données Tᵢ(C) du flux média relatif au contenu F₁(C),
- le ou les critères CAₖ (avec *k* ≥ 1) d'accès au contenu C, s'il s'agit d'un contenu à accès conditionnel, et
- au moins un identifiant de module de décodage répudié, inscrit sur la liste noire de révocation et noté IDₙ (avec 1 ≤ *n* ≤ *N*).

Un message ECMᵢ (avec *i* = {1,2,3,...}) pourrait contenir un ou plusieurs identifiants de module de décodage répudié. On pourrait également envisager que seulement une partie des messages ECMᵢ (avec *i* = {1,2,3,...}) contiennent un ou plusieurs identifiant(s) de module de décodage répudié, les autres messages ECM n'en contenant pas. Par exemple, un message ECMᵢ sur deux pourrait véhiculer un ou plusieurs identifiant(s) de module de décodage répudié. En toute hypothèse, au moins une partie des messages de contrôle d'accès transmis contiennent chacun au moins un identifiant de module de décodage répudié. L'intégralité des identifiants IDₙ (avec 1 ≤ *n* ≤ *N*) de la liste de révocation est ici insérée dans un groupe de messages de contrôle d'accès ECM générés.

Dans l'exemple particulier de la présente description, chaque message ECMᵢ avec *i* = {1,2,3,...}) contient un seul identifiant de module de décodage répudié. L'intégralité des identifiants de la liste noire de révocation est contenue dans un groupe de N messages ECMᵢ successifs du flux de messages ECM émis par le serveur 6, où N correspond au nombre d'identifiants de décodeurs répudiés de la liste noire.

La transmission du flux de messages ECM par le serveur 6 et la transmission du flux média chiffré F₁'(C) du contenu C par le serveur 5 sont synchronisées. La synchronisation entre la transmission d'un message ECMᵢ (avec *i* = {1,2,3,...}) donné transportant un mot de contrôle CWᵢ (avec *i* = {1,2,3,...}) utilisé pour chiffrer une trame de données du contenu C, notée T_{¡}(C) (avec *i* = {1,2,3,...}), et la transmission de cette trame de données Tᵢ(C) du contenu C signifie que ce message ECMᵢ est transmis de façon répétée durant une période de durée τ sensiblement concomitante avec la période de transmission de cette trame Tᵢ(C) du contenu C. Afin d'anticiper le déchiffrement des données média, la période de transmission du message ECMᵢ débute légèrement avant celle de transmission de la trame correspondante Tᵢ(C) des données média du contenu C.

L'équipement client 1 comprend un module de décodage 2, en l'espèce un décodeur d'un appareil Set-Top-Box TV, et un module de sécurité 3, en l'espèce une carte à puce. Le décodeur TV 2 et la carte à puce 3 sont destinés à être connectés l'un à l'autre et à dialoguer ensemble après avoir procédé à une authentification mutuelle. Cette authentification est basée sur une infrastructure à clé publique dans laquelle le décodeur 2 et carte 3 possèdent chacun un certificat. Lors de l'authentification, les deux modules 2 et 3 s'échangent leurs certificats respectifs et réalisent différentes vérifications bien connues de l'homme du métier : vérification de l'intégrité cryptographique du certificat, vérification du format du certificat, vérification de la sémantique du certificat (durée de validité, etc.), vérification de non-répudiation de la carte par le décodeur. Lors de l'authentification préalable au dialogue entre le décodeur 2 et la carte 3, la carte 3 ne réalise pas de vérification de non-répudiation du décodeur 2. Cette vérification est faite ultérieurement, lors du dialogue, comme cela sera explicité plus loin.

De façon connue, la carte à puce 3 mémorise les droits de l'utilisateur client et la clé K_{CW} permettant de déchiffrer les mots de contrôle présents dans les messages de contrôle ECM. Elle a pour rôle de vérifier si le ou les critères d'accès présents dans un ECM présenté par le décodeur 2 à la carte 3 sont satisfaits par les droits d'utilisateur mémorisés dans la carte 3 et, le cas échéant, de déchiffrer le mot de contrôle présent dans le message ECM avant de le transmettre au décodeur 2.

On va maintenant décrire le procédé de transmission d'un contenu C par le serveur 5 vers l'équipement client 1 et le procédé de réception de ce contenu C par l'équipement client 1.

D'emblée, on notera que le contenu C est transmis sous la forme d'un flux comportant une succession de trames Tᵢ(C) (avec *i* = {1,2,3,...}) de durée τ. Dans l'exemple décrit ici, la durée τ d'une trame est égale à 10 secondes.

Dans une étape E0, le serveur 5 d'émission de contenus chiffre le flux de données média relatives au contenu C, F₁(C), à l'aide de mots de contrôle successifs, notés CWᵢ, avec i égal à 1, 2, etc.. Un mot de contrôle CWᵢ propre est utilisé pour chiffrer chaque trame T_{¡}(C) du flux F₁(C). Les trames de contenu successives T₁(C), T₂(C), ..., Tᵢ(C), ... sont ainsi chiffrées à l'aide de mots de contrôle successifs distincts CW₁, CW₂, ..., CWᵢ, ....

Lors d'une étape E1, le flux média chiffré relatif au contenu C, F₁'(C), est émis par le serveur 5, à travers l'Internet, vers l'équipement client 1, suivant les trames T₁(C), T₂(C), ..., Tᵢ(C), .... La transmission est réalisée ici en mode "streaming" (c'est-à-dire en mode de diffusion en continu) et en "multicast" (c'est-à-dire en mode de diffusion de point à multipoint).

Lors d'une étape E'0, le serveur 6 d'émission de messages ECM génère un flux F₂[ECM(C)] contenant une succession de messages de contrôle d'accès au contenu C, notés ECMᵢ, avec i égal à 1, 2, etc. Chaque message de contrôle d'accès ECMᵢ contient ici un critère d'accès au contenu C, noté CA, un mot de contrôle CWᵢ et ici un identifiant, noté IDₙ (avec 1 ≤ *n* ≤ *N*), de décodeur répudié de la liste noire de révocation.

Le flux de messages ECM F₂[ECM(C)] comprend une succession de trames Pᵢ (avec i égal à 1, 2, ...) de durée sensiblement égale à τ. Chaque trame Pᵢ du flux d'ECM correspond à la période de transmission du message ECMᵢ donné. Durant la trame Pᵢ, le message ECMᵢ est transmis de façon répétée.

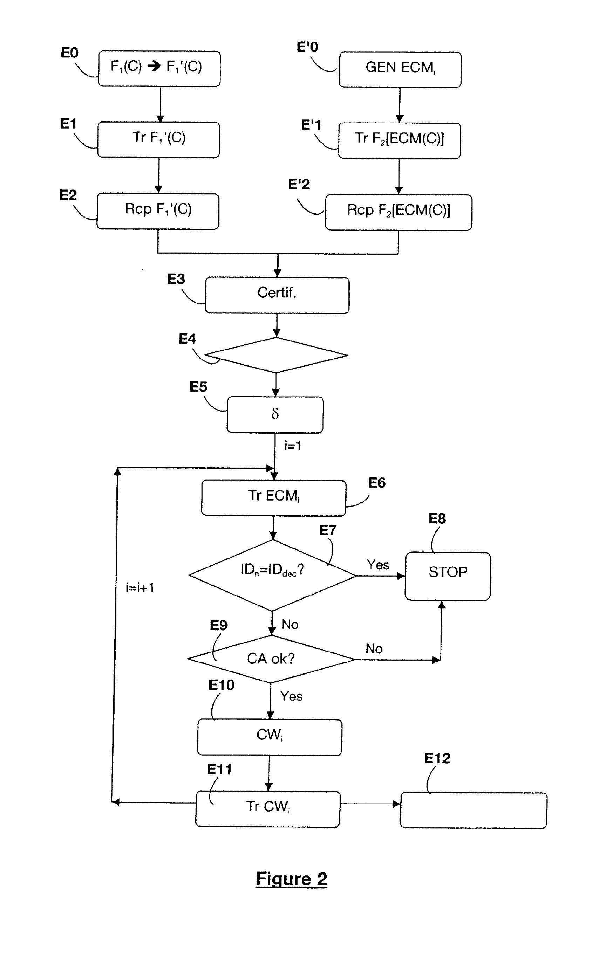

Parallèlement à la transmission du flux média chiffré F₁'(C) par le serveur 5, le serveur 6 émet le flux F₂[ECM(C)] contenant les messages successifs de contrôle d'accès au contenu C (ECM₁, ECM₂, ....), à travers l'Internet 7, vers l'équipement client 1. L'opération de transmission du flux F₂[ECM(C)] de messages ECM est notée E'1 sur la figure 2. Les identifiants de la liste noire de révocation sont respectivement transmis dans les messages ECMᵢ successifs du flux F₂[ECM(C)]. La liste noire de révocation contient ici N identifiants de décodeurs répudiés. L'intégralité des N identifiants de modules de décodage répudiés de la liste noire de révocation est transmise à l'équipement client 1 par l'envoi d'un groupe de N messages de contrôle d'accès successifs. Chaque groupe de N messages comprenant par exemple les messsages ECM_{jN+1} à ECM_{jN+N} (j étant égal à 0, 1, ...), contient de façon répartie les N identifiants de la liste noire de révocation, chaque message ECM contenant un identifiant de la liste noire de révocation. La liste noire de révocation est, le cas échéant, transmise à plusieurs reprises durant la durée de transmission des flux F₂[ECM(C)] et F₁'(C) parallèles. La liste peut également être mise à jour à tout moment par le serveur 6.

La transmission E'1 du flux F₂[ECM(C)] de messages de contrôle d'accès ECM est synchronisée avec la transmission E1 du flux F'₁(C) de données média chiffrées du contenu C. La synchronisation des flux F'₁(C) et F₂[ECM(C)] est telle que lorsque l'équipement client 1 reçoit la trame Tᵢ de données média du contenu C chiffrée avec le mot de contrôle CWᵢ , il reçoit parallèlement la trame de données Pᵢ contenant le message ECMᵢ qui contient lui-même le mot de contrôle CWᵢ sous forme chiffrée.

En réception, le décodeur 2 reçoit le flux média protégé F'₁(C) relatif au contenu C, lors d'une étape E2, et, concomitamment, lors d'une étape E2', le flux F₂[ECM(C)] de messages ECM de contrôle d'accès au contenu C.

Afin d'entamer le dialogue entre le décodeur 2 et la carte 3 en vue de transmettre les messages ECM reçus par le décodeur 2 à la carte 3, les deux modules 2 et 3 s'échangent leurs certificats respectifs, lors d'une étape E3. Puis, lors d'une étape E4, le décodeur 2 et la carte 3 s'échangent leurs certificats respectifs et réalisent certaines vérifications mutuelles, bien connues de l'homme du métier : vérification de l'intégrité cryptographique du certificat, vérification du format du certificat, vérification de la sémantique du certificat (durée de validité, ...). En outre le décodeur 2 vérifie la non-répudiation de la carte 3.

Une fois ces vérifications réalisées, et dans l'hypothèse où elles sont positives, la carte 3 et le décodeur 2 se mettent d'accord sur une clé secrète partagée, notée δ, destinée à protéger les échanges entre la carte 3 et le décodeur 2, lors d'une étape E5.

Lors d'une étape E6, le décodeur 2 transmet à la carte 3 un premier ECM reçu du flux F₂[ECM(C)], par exemple ECM₁. On notera que si le décodeur 2 débute la réception du contenu C après le début de sa transmission, le premier ECM reçu est un ECMᵢ postérieur avec i>1.

Lors d'une étape E7, la carte 3 extrait l'identifiant, ici ID₁, de décodeur répudié du message ECM₁ et le compare à l'identifiant du module de décodage courant 2, présent dans le certificat préalablement reçu à l'étape E3.

En cas de comparaison positive, autrement dit si le décodeur courant 2 est répudié, le dialogue entre la carte 3 et le décodeur 2 est ici interrompu lors d'une étape E8. En variante, la carte 3 pourrait interrompre seulement la transmission de mots de contrôle déchiffrés (à l'aide de la clé K_{cw}) vers le décodeur 2.

En cas de comparaison négative entre l'identifiant du décodeur courant 2 et l'identifiant ID₁ reçu de la liste noire de révocation, la carte 3 vérifie le critère d'accès CA au contenu C, présent dans le message ECM₁ par comparaison avec les droits d'utilisateur stockés dans la carte 3, lors d'une étape E9.

Si le critère d'accès CA au contenu C est satisfait, la carte 3 déchiffre le mot de contrôle CW₁ présent dans le message ECM₁, à l'aide de la clé K_{cw} stockée, lors d'une étape E10, et transmet le mot de contrôle déchiffré CW₁ au décodeur 2, lors d'une étape E11. La transmission du mot de contrôle CW₁ sous forme déchiffrée de la carte 3 au décodeur 2 est protégée par cryptographie à l'aide de la clé partagée δ établie lors de l'étape E5.

Suite à l'étape E11, le décodeur 2 déchiffre la trame T₁(C) du flux F1'(C) correspondant au message ECM₁ reçu, à l'aide du mot de contrôle CW₁, lors d'une étape E12.

A la réception de chaque nouveau message ECMᵢ (avec i = 2, 3, ...) contenant un identifiant de décodeur répudié IDₙ de la liste noire de révocation, les étapes E6-E7 et E9 à E11 sont réitérées si l'identifiant du décodeur 2 ne correspond pas à l'identifiant IDₙ reçu, ou bien les E6 à E8 sont exécutées si l'identifiant du décodeur 2 correspond à l'identifiant IDₙ reçu.

La carte 3 peut ainsi comparer l'identifiant du décodeur courant 2 avec les N identifiants de la liste noire de révocation en traitant N messages ECMᵢ successifs distincts, par exemple les messages ECM₁ à ECM_{N}.

La liste noire de révocation peut être transmise plusieurs fois de suite, selon la durée de la transmission du contenu C.

On va maintenant décrire un second mode de réalisation ne différant du premier mode de réalisation décrit ci-dessus que par les éléments décrits ci-après.

Dans ce deuxième mode de réalisation, on suppose que la carte 3 a été successivement connectée à plusieurs décodeurs distincts. A chaque connexion avec un décodeur, la carte 3 mémorise l'identifiant de ce décodeur. Il en résulte que la carte 3 stocke en mémoire l'identifiant d'un ou plusieurs précédent(s) décodeur(s) ainsi que l'identifiant du décodeur courant auquel elle est actuellement connectée.

A la réception de chaque message ECMᵢ contenant un identifiant IDₙ de décodeur répudié, la carte 3 compare l'identifiant IDₙ reçu à la fois à l'identifiant de décodeur courant et à chaque identifiant de décodeur précédent mémorisé.

Si l'identifiant de décodeur répudié IDₙ reçu correspond à l'identifiant d'un décodeur précédent, la carte 3 mémorise cet identifiant IDₙ en tant que décodeur répudié, afin d'interdire tout éventuel nouveau dialogue ultérieur avec ce décodeur. En variante, la carte 3 pourrait interdire seulement la transmission de mots de contrôle déchiffrés à ce décodeur répudié, lors d'une nouvelle connexion ultérieure.

Si l'identifiant de décodeur répudié IDₙ reçu correspond à l'identifiant du décodeur courant, la carte 3 interdit la poursuite du dialogue avec le décodeur courant. En variante, la carte 3 pourrait interdire seulement la transmission de mots de contrôle déchiffrés à ce décodeur répudié.

Si le test est négatif, autrement dit si l'identifiant de décodeur répudié IDₙ ne correspond ni à l'identifiant du décodeur courant, ni à celui d'un décodeur précédent, le dialogue entre le décodeur 2 et la carte 3 est poursuivi normalement. La carte 3 vérifie alors le critère d'accès au contenu C présent dans le message ECMᵢ et, s'il est satisfait, déchiffre le mot de contrôle et l'envoie au décodeur courant. Celui-ci déchiffre alors la trame de données média correspondante du flux F₁'(C) reçu.

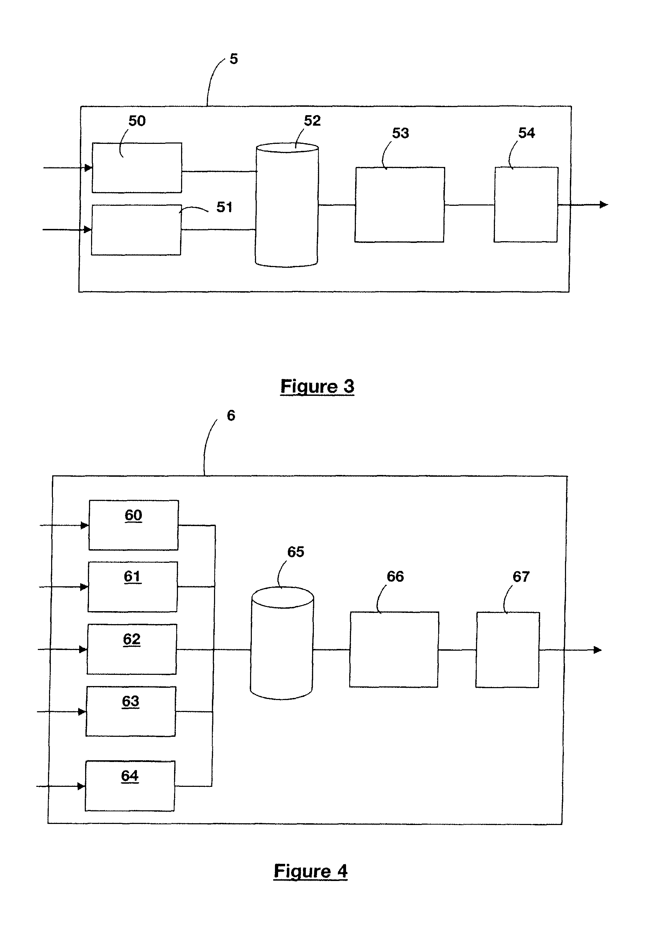

En référence aux figures 3, 4, 5A et 5B, on va maintenant décrire le serveur 5 d'émission de contenus, le serveur 6 d'émission de messages ECM et l'équipement client 1 composé du décodeur 2 et de la carte 3.

Le serveur 5 d'émission de contenus comprend, de façon connue :
- un premier module de réception 50 adapté pour recevoir le flux F₁(C) en clair de données média d'un contenu donné C;
- un deuxième module de réception 51 adapté pour recevoir une succession de mots de contrôle CWᵢ (avec i = 2, 3, ...) associés à ce contenu C et contenant des clés pour le déchiffrement de trames de données média du contenu C, ainsi que des données relatives à la programmation de l'émission du contenu C (par exemple date et heure d'émission et/ou adresse multicast d'émission ou bien adresse unicast d'émission, ...)
- une base de données 52 de stockage des données reçues relatives à chaque contenu C (données média du contenu, mots de contrôle CWᵢ (avec i = 2, 3, ...), informations sur l'émission du contenu C);
- un module de chiffrement 53 adapté pour chiffrer des trames de données média en clair du contenu C reçues à l'aide des mots de contrôle successifs reçus CWᵢ (avec i = 2, 3, ...);
- un module d'émission 54 adapté pour émettre un flux chiffré de données média du contenu C.

Le serveur 5 est adapté pour mettre en oeuvre celles des étapes du procédé précédemment décrit qui sont réalisées par le serveur d'émission de contenu, à savoir les étapes E0 et E1.

Le serveur 6 d'émission de messages ECM comprend de façon connue :
- un premier module de réception 60 adapté pour recevoir une succession de mots de contrôle CWᵢ (avec i = 2, 3, ...) associés à un contenu C;
- un deuxième module de réception 61 adapté pour recevoir un ou plusieurs critères d'accès CA (ou CAₖ ) relatifs à ce contenu C (dans le cas où le contenu C est à accès conditionnel),
- un troisième module de réception 62, adapté pour recevoir une clé K_{CW} de chiffrement des mots de contrôle CWᵢ (avec i = 2, 3, ...) reçus,
- un quatrième module de réception 63, adapté pour recevoir des informations relatives à l'émission du contenu C ;
- un cinquième module 64 de réception d'une liste noire de révocation contenant les identifiants de décodeurs répudiés;
- une base de données 65 de stockage de données reçues relatives à chaque contenu C (critère(s) d'accès CA, clé de chiffrement K_{CW}, informations relatives à l'émission du contenu C, liste noire de révocation);
- un module 66 de génération d'un flux de messages ECM associé au contenu C, noté F₂[ECM(C)], et contenant une succession de messages de contrôle d'accès au contenu C, notés ECMᵢ (avec *i* = {1,2,3,...});
- un module 67 d'émission du flux F₂[ECM(C)] de messages ECM contenant les messages ECMᵢ (avec *i* = {1,2,3,...}) générés.

Les cinq modules de réception 60-64 sont reliés à la base de données 65, qui est elle-même reliée au module de génération 64.

Le module de génération 64 est adapté pour mettre en oeuvre l'étape E0' de génération de messages ECM associés à un contenu C, selon le procédé préalablement décrit. Plus précisément, le module 64 est adapté pour générer un flux F₂[ECM(C)] contenant une succession de messages de contrôle d'accès au contenu C, notés ECMᵢ, avec i égal à 1, 2, etc. Dans chaque message de contrôle d'accès ECMᵢ, le module de génération 64 est adapté pour insérer un ou plusieurs critère(s) d'accès au contenu C, un mot de contrôle CWᵢ sous forme chiffrée et ici un identifiant IDₙ (avec 1 ≤ *n* ≤ *N*) de décodeur répudié de la liste noire de révocation. Le flux de messages ECM F₂[ECM(C)] généré comprend une succession de trames Pᵢ (avec i égal à 1, 2, ...) de durée sensiblement égale à τ, chaque trame du flux d'ECM correspondant à la période de transmission d'un même message ECMᵢ donné de façon répétée.

Le module d'émission 67, relié au module de génération 66, est adapté pour émettre le flux de messages ECM F₂[ECM(C)] de façon synchronisée avec la transmission du flux de données média relatives au contenu C.

Le serveur de contenus 5 et le serveur d'ECM 6 communiquent entre eux pour synchroniser l'émission du flux chiffré F₁'(C) de données média d'un contenu C et l'émission du flux F₂[ECM(C)] de messages ECM associés à ce contenu C.

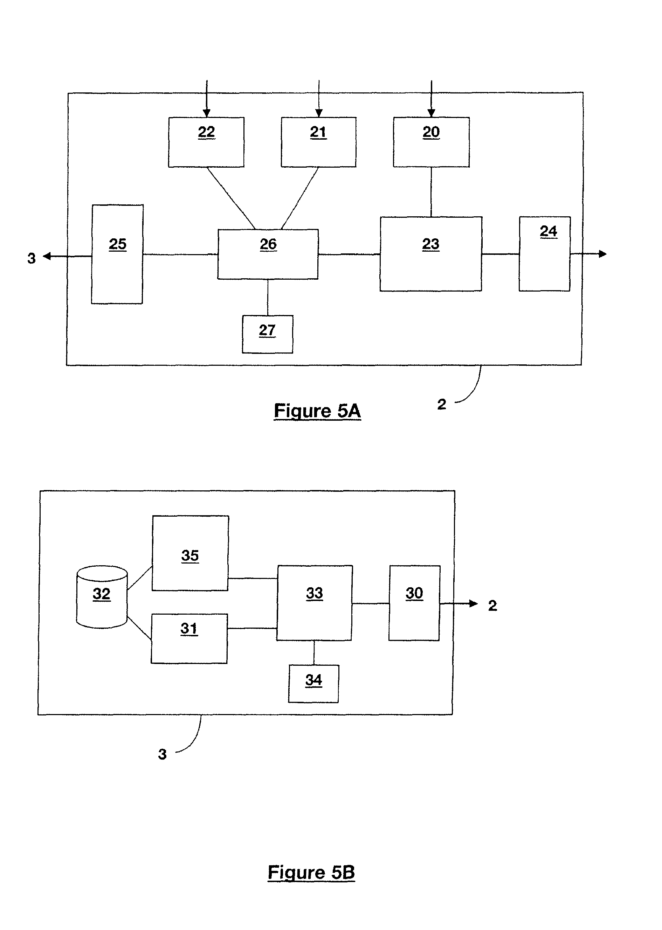

En référence aux figures 5A et 5B, on va maintenant décrire une forme de réalisation particulière de l'équipement client 1, adapté pour mettre en oeuvre le procédé précédemment décrit selon la première forme de réalisation de l'invention.

L'équipement client 1 comprend un décodeur Set-Top-Box TV 2 représenté sur la figure 5A et une carte à puce 3 représentée sur la figure 5B.

Le décodeur 2 comprend
- un module 20 de réception d'un flux chiffré de données média d'un contenu;
- un module 21 de réception de messages de gestion de droits EMM et de retransmission de ces messages vers la carte connectée au décodeur 2;
- un module 22 de réception d'un flux de messages ECM associés à un contenu en cours de réception et de retransmission des messages ECM reçus vers la carte connectée au décodeur 2;
- un module de déchiffrement 23, relié au module 20 de réception du flux de données média de contenu;
- une interface 24 de sortie vers un dispositif de restitution tel qu'un écran TV de visualisation;
- une interface 25 de connexion avec une carte à puce;
- un module 26 de dialogue avec une carte à puce, relié à une mémoire 27 de stockage du certificat du décodeur 2;
- une unité centrale de commande, non représentée, à laquelle tous les éléments du décodeur 2 sont connectés et destinée à contrôler le fonctionnement de ce décodeur 2.

La carte 3 comprend
- une interface 30 de connexion avec un décodeur;
- un module 31 de réception et de traitement de messages de gestion de droits EMM;
- une mémoire 32 destinée à mémoriser les droits d'utilisateur et la clé K_{cw} de déchiffrement des mots de contrôle, contenus dans un ou plusieurs message(s) EMM reçu(s);
- un module 33 de dialogue avec un décodeur TV, relié à une mémoire 34 de stockage du certificat de la carte 3;
- un module 35 de réception et de traitement de messages ECM, destiné à vérifier si le ou les critères d'accès contenus dans un message ECM sont satisfaits par les droits d'utilisateur mémorisés et, le cas échéant, à déchiffrer le mot de contrôle présent dans ce message ECM;
- une unité centrale de commande, non représentée, à laquelle tous les éléments de la
   carte 3 sont reliés et destinée à contrôler le fonctionnement de la carte 3.

Les modules 26 et 33 de dialogue du décodeur 2 et de la carte 3 respectivement sont adaptés pour mettre en oeuvre les étapes d'authentification mutuelle E3, E4 et E5 précédemment décrites. En particulier, les modules 26 et 33 sont agencés pour - échanger leurs certificats respectifs,
- réaliser diverses vérifications relatives à ces certificats (vérifications de l'intégrité cryptographique, du format et de la sémantique des certificats échangés) et
- si ces vérifications sont positives, procéder à une mise à clé, c'est-à-dire se mettre d'accord sur une clé cryptographique δ pour protéger les échanges entre la carte 3 et le décodeur 2.

En outre, les modules de dialogue 26 et 33 sont agencés pour stocker la clé de chiffrement δ et pour chiffrer ou déchiffrer, selon le sens de transmission, les données échangées entre le décodeur 2 et la carte 3 lors du dialogue entre les deux modules.

Le module 35 de traitement des messages ECM de la carte 3 est adapté pour mettre en oeuvre les étapes E7 et E9 à E11 ou les étapes E7 et E8, à la réception de chaque message ECM. Plus précisément, à la réception d'un message ECM, le module de traitement 35 est adapté pour vérifier si l'identifiant IDₙ de décodeur répudié présent dans l'ECM correspond ici à l'identifiant du décodeur courant auquel la carte 3 est connecté. Si la vérification est positive, le module 35 commande une interruption du dialogue avec ce décodeur (en variante, il pourrait commander seulement une interruption de la transmission des mots de contrôle déchiffrés au décodeur). Si la vérification est négative, le module de traitement 35 est agencé pour vérifier le ou les critères d'accès présents dans l'ECM en fonction des droits d'utilisateur mémorisés et, si le ou les critères d'accès sont satisfaits, déchiffrer le mot de contrôle présent dans l'ECM et le transmettre au décodeur.

Le module de déchiffrement 23 du décodeur 2 est adapté pour recevoir les mots de contrôle déchiffrés transmis par la carte 3 à travers les interfaces 25 et 30 entre la carte et le décodeur et pour déchiffrer des données média du contenu C reçues, conformément à l'étape E12 du procédé précédemment décrit.

Les modules 23, 26 du décodeur 2 et 31, 33 et 35 de la carte sont ici des modules logiciels comprenant des instructions de programme pour exécuter des étapes de procédé correspondantes.

Dans la description qui précède, on transmet les identifiants de la liste noire des décodeurs répudiés dans différents messages de contrôle d'accès transmis de façon synchronisée avec la transmission du flux de données média du contenu C. On pourrait envisager de transmettre de la même manière des identifiants de cartes répudiées d'une liste noire de révocation de cartes à puce.

Dans la description qui précède, le module de décodage et le module de sécurité réalisent une mise à clé après avoir effectué une authentification mutuelle. En variante, le processus de mise à la clé pourrait être réalisé par un serveur tiers, de façon connue, sans authentification mutuelle entre les deux modules. Dans ce cas, sur requête de chaque module, le serveur tiers envoie à ce module la clé partagée δ pour le dialogue entre les deux modules. Ce processus peut s'accompagner d'une authentification de chacun des deux modules par le serveur. En variante, la clé partagée δ peut être insérée dans un message EMM qui est transmis dans le flux de données du contenu C au module de décodage et dans un autre message EMM qui est transmis dans le flux de données du contenu C au module de sécurité. Dans une autre variante, on peut envisager que l'un des deux modules s'authentifie auprès du serveur avant de recevoir la clé partagée, alors que l'autre reçoit la clé partagée dans un message EMM présent dans le flux de données du contenu C.

Dans la description qui précède, l'équipement client comporte un décodeur et une carte à puce externe. En variante, l'équipement client pourrait comprendre un décodeur, une carte à puce externe et un chipset sécurisé intégré au décodeur. Dans ce cas, les mots de contrôle sont sur-chiffrés (c'est-à-dire chiffrés deux fois) et destinés à être déchiffrés d'une part par la carte à puce et d'autre part par le chipset sécurisé. Les messages ECM pourraient dans ce cas véhiculer des identifiants de chipset sécurisé répudié, pour permettre à la carte de vérifier la non-répudiation du chipset de l'équipement client, ou inversement des identifiants de carte à puce répudiée pour permettre au chipset de vérifier la non-répudiation de la carte à puce.

L'équipement client pourrait aussi comprendre un décodeur et, à la place de la carte à puce externe, un chipset sécurisé intégré.

Les messages ECM pourraient véhiculer également les identifiants d'une liste de révocation de cartes à puces ou d'une liste de révocation de chipsets.

D'une manière générale, une liste de révocation contenant une pluralité d'identifiants de module d'équipement client répudié ayant été établie, une pluralité - un groupe - de messages de contrôle d'accès transmis contiennent chacun au moins un identifiant de module répudié de cette liste de révocation, de manière à ce que l'intégralité des identifiants de la liste de révocation soit transmise à un module de l'équipement client, noté ici A par souci de clarté, par la transmission des messages de contrôle d'accès de ce groupe. Ainsi, un autre module de l'équipement client, noté ici B par souci de clarté, destiné à dialoguer avec le module A peut vérifier si le module B est répudié.

La présente invention est applicable non seulement à la transmission d'un flux de données à travers un réseau de communication IP tel que l'Internet, comme décrit précédemment, mais également à la transmission d'un flux de données à travers un réseau mobile ou tout autre réseau de communication. Dans ce cas, le module de décodage peut comprendre un décodeur intégré au terminal mobile et le module de sécurité comprend une carte SIM connectée au terminal mobile ou un chipset sécurisé intégré au terminal mobile.

## Revendications

1. Procédé de transmission d'un flux de données relatives à un contenu numérique (C), à travers un réseau de communication (7), vers un équipement client (1) comportant au moins deux modules, l'un de décodage (2) et l'autre de sécurité (3), adaptés pour dialoguer entre eux, dans lequel il est prévu:
- une transmission (E1) d'un flux chiffré (F₁'(C)) de données relatives au contenu (C) vers l'équipement client (1),
- une transmission (E'1) d'un flux (F₂[ECM(C)]) de messages de contrôle d'accès au contenu (C) vers l'équipement client (1),
**caractérisé par le fait que**, une liste de révocation contenant des identifiants de module d'équipement client répudié ayant été établie, au moins une partie des messages de contrôle d'accès transmis (ECM(C)) contiennent chacun au moins un identifiant de module répudié de ladite liste de révocation.

2. Procédé selon la revendication 1, dans lequel l'intégralité des identifiants de la liste de révocation est transmise par la transmission d'un ensemble de messages de contrôle d'accès.

3. Procédé selon la revendication 1, dans lequel les identifiants transmis dans les messages de contrôle sont ceux de modules de décodage répudiés.

4. Procédé de réception d'un flux continu de données relatives à un contenu numérique (C), à travers un réseau de communication (7), par un équipement client (1) comportant au moins deux modules, l'un de décodage (2) et l'autre de sécurité (3), adaptés pour dialoguer entre eux, dans lequel il est prévu
- une réception (E2) d'un flux chiffré (F₁'(C)) de données relatives au contenu (C),
- une réception (E'2) d'un flux (F₂[ECM(C)]) de messages de contrôle d'accès au contenu (C), **caractérisé par le fait que**, au moins une partie des messages de contrôle d'accès reçus contenant chacun au moins un identifiant de module répudié d'une liste de révocation comportant des identifiants de module d'équipement client répudié, il est prévu une étape (E7) de comparaison de chaque identifiant de module répudié reçu avec un identifiant du module correspondant courant de l'équipement client (2) et, en cas de comparaison positive, la transmission entre les deux modules (2, 3) de l'équipement client (1) est au moins partiellement interrompue.

5. Procédé selon la revendication 4, dans lequel l'un des deux modules (2, 3) de l'équipement client (1) stockant l'identifiant d'au moins un module précédent avec lequel il a précédemment dialogué, il est prévu, lors de l'étape de comparaison (E7), de comparer l'identifiant de module répudié reçu à l'identifiant de module précédent stocké.

6. Procédé selon la revendication 4, dans lequel les identifiants de module répudié reçus correspondant à des identifiants de modules de décodage, l'étape (E7) de comparaison d'un identifiant reçu est réalisée par le module de sécurité (3) et consiste à comparer ledit identifiant reçu à l'identifiant du module de décodage courant (2).

7. Procédé selon la revendication 6, dans lequel, chaque message de contrôle d'accès au contenu (C) contenant une clé (CWᵢ) sous forme chiffrée destinée à être déchiffrée puis transmise par le module de sécurité (3) au module de décodage (2) et apte à déchiffrer au moins une partie des données du contenu, en cas de comparaison positive entre l'identifiant de module décodage courant (2) et l'identifiant de module de décodage répudié reçu dans ledit message de contrôle d'accès, la transmission de clés (CWᵢ) entre le module de sécurité (3) et le module de décodage (2) est interrompue.

8. Serveur de génération et d'émission à travers un réseau de communication de messages de contrôle d'accès, comprenant des moyens (66) de génération de messages de contrôle d'accès à un contenu numérique et des moyens (67) d'émission des messages de contrôle d'accès générés sous la forme d'un flux synchronisé avec la transmission d'un flux de données du contenu, **caractérisé par le fait que**, une liste de révocation contenant des identifiants de module d'équipement client répudié ayant été établie, les moyens (66) de génération de messages de contrôle d'accès sont agencés pour insérer dans au moins une partie des messages de contrôle d'accès au moins un identifiant de module répudié de ladite liste de révocation par message.

9. Equipement de réception d'un flux de données relatives à un contenu numérique, à travers un réseau de communication, comportant au moins deux modules, l'un de décodage (2) et l'autre de sécurité (3), adaptés pour dialoguer entre eux, dans lequel il est prévu
- des moyens (20) de réception d'un flux chiffré (F₁'(C)) de données de contenu,
- des moyens (22) de réception d'un flux (F₂[ECM(C)]) de messages de contrôle d'accès au contenu,
**caractérisé par le fait qu'**au moins une partie des messages de contrôle d'accès reçus contenant chacun au moins un identifiant de module répudié d'une liste de révocation, il comprend des moyens de comparaison adaptés pour comparer un identifiant de module répudié reçu dans un message de contrôle d'accès avec un identifiant du module correspondant courant de l'équipement client (2) et, en cas de comparaison positive, des moyens (35) pour commander une interruption au moins partielle du dialogue entre les deux modules (2, 3) de l'équipement client (1).

10. Module de sécurité pour un équipement de réception selon la revendication 9, comprenant des moyens (35) de réception et de traitement de messages de contrôle d'accès à un contenu numérique (C), **caractérisé par le fait qu'**au moins une partie des messages de contrôle reçus contenant chacun au moins un identifiant de module de décodage répudié d'une liste de révocation, il comprend des moyens (35) de comparaison adaptés pour comparer un identifiant de module répudié reçu dans un message de contrôle d'accès avec un identifiant d'un module de décodage courant auquel est connecté le module de décodage et, en cas de comparaison positive, des moyens (35) pour commander une interruption au moins partielle du dialogue entre les deux modules.
